# EUROPEAN PATENT APPLICATION

(11) **EP 4 282 263 A1**
(43) Date of publication of application: **29.11.2023**
(21) Application number: 23174469.9
(22) Date of filing: 22.05.2023
(51) Int. Cl.: A01K 85/00, A01K 85/14, A01K 85/16, A01K 95/00

(54) **INLINE LURE**

(30) Priority: 24.05.2022 DK PA202200487
(71) Applicant: Panzerfish ApS, 4490 Jerslev Sjælland (DK)
(72) Inventor: Nielsen, Dan Bach, 4490 Jerslev Sjælland (DK)
(74) Representative: Larsen & Birkeholm A/S

(57) **Abstract**

The invention relates to an inline lure for use when fishing with a fishing rod and a fishing hook, comprising a body (1) constituted of a material, the body (1) has a through-going opening (2) in the longitudinal direction (x) of the body (1) comprising two openings, a first and a second opening (2a, 2b), and a line (3) is positioned through this through-going opening (2) during use, an X-axis is defined along the through-going opening (2) defining the length of the body (1), a Z-axis is defined perpendicular to the X-axis defining the width of the body (1), and an Y-axis is defined perpendicular to both the X-axis and the Z-axis defining the height of the body (1) and the length x > the maximum width z > the maximum height y, wherein the body (1) is made of a material having a density between 2.000 and 2.900 kg/m³, or preferably between 2.100 and 2.800 kg/m³, or preferably between 2.200 and 2.700 kg/m³.

## Description

The present invention relates to a fishing lure, more precisely to an inline lure, to be used when fishing with a fishing rod.

### Background of the invention

A lure is designed to attract fish when fishing with a rod, the lure together with the fishing hook or similar is thrown out by the fishing rod, and then the lure together with the fishing hook is pulled back through the water.

The document US 2016/0338329A discloses a fishing lure comprising a fishing lure frame for a bladed fishing lure assembly which frame comprises a substantially straight-line construction between a fishing line connection and a trailing fishhook or fishhook assembly. The bladed fishing lure assembly comprises an oscillating blade (22), a weight (26) and a fishhook (44) or fishhook assembly affixed to the frame. The frame includes a feature for connecting a fishing line at a forward end and a rearwardly disposed portion whereat the weight is securely affixed such that frame motion influences subsequent motion of the weight. The blade is positioned forward relative to the weight such that when drawn through the water, the blade oscillates side-to-side. The frame may include a loosely affixed fishhook rearward of the weight using a split ring or the fishhook be attached directly to the frame. The fishhook may be a treble, single barbed or other suitable hook. The frame may also include a clasp whereby the blade is securely, but releasably affixed thereto. A substantially straight line (inline) frame construction between the fishing line connection and fishhook or fishhook assembly assures the bladed fishing lure assembly is not de-tuned by changes that alter the original manufacturing geometry of the frame due to opposing pulling forces (from a fish or snag).

Hence, this fishing lure is rather complicated and comprises a blade which is designed to oscillate when the device is drawn through the water and a weight which is designed to pull the device down. The fishing lure according to the present invention may constitute both an oscillating part and a weight.

### Summary of the invention

Thus, an object of the present invention is to provide an environmentally safe fishing lure which may be thrown with great precision, and which will keep a bait in a desired depth according to the fish you wish to catch.

Thus, one aspect of the invention relates to an inline lure for use when fishing with a fishing rod and a fishing hook, comprising a body (1) constituted of a material, the body (1) has a through-going opening (2) in the longitudinal direction (x) of the body (1) comprising two openings, a first and a second opening (2a, 2b), and a line (3) is positioned through this through-going opening (2) during use, an X-axis is defined along the through-going opening (2) defining the length of the body (1), a Z-axis is defined perpendicular to the X-axis defining the width of the body (1), and an Y-axis is defined perpendicular to both the X-axis and the Z-axis defining the height of the body (1) and the maximum length xₘₐₓ of the body is larger than the maximum width zₘₐₓ of the body, and the maximum width zₘₐₓ of the body is larger than the maximum height yₘₐₓ of the body, and the body (1) is made of a material having a density between 2.000 and 2.900 kg/m³, or preferably between 2.100 and 2.800 kg/m³, or preferably between 2.200 and 2.700 kg/m³.

According to any embodiment of the first aspect of the invention, the body (1) may be made of an amorphous material such as glass. Amorphous materials have the advantage of being easy to work with and having a high degree of transparency allowing to provide the body of the inline lure with embedded colours and effects. Further, glass has the advantage over polymers in that if a unit made of glass is lost in nature, it will leave no environmental trace, and glass may be melted and re-used again.

According to any embodiment of the first aspect of the invention, the body (1) may be made exclusively of an amorphous material such as glass, i.e. the body (1) does not comprise other materials but e.g. glass. However, the body (1) may comprise one, two or three or more different types of glass materials, such as glass materials having different density or colour or enclosed gas bubbles. Gas bubbles are not considered a different material but may be used to control the density of the body (1) and create desired visual effects.

According to any embodiment of the first aspect of the invention, the maximum length xₘₐₓ may be equal to or larger than 1.5 · maximum width zₘₐₓ. Optional, the maximum length xₘₐₓ may be equal to or smaller than 5 · maximum width zₘₐₓ (The symbol "·" means "times").

According to any embodiment of the first aspect of the invention, the maximum length xₘₐₓ may be equal to or larger than 5 · maximum height yₘₐₓ. Optional, the maximum length xₘₐₓ may be equal to or smaller than 10 · maximum height yₘₐₓ.

According to any embodiment of the first aspect of the invention, the maximum length xₘₐₓ extends between the first and the second opening (2a, 2b) of the through-going opening (2).

According to any embodiment of the first aspect of the invention, the body (1) may be symmetrical around the X-Y-plane.

According to any embodiment of the first aspect of the invention, the body (1) may be symmetrical around the X-Z-plane.

According to any embodiment of the first aspect of the invention, the first and the second opening (2a, 2b) may be positioned at opposite ends in the longitudinal direction of the body (1), and the first opening (2a) is closest to the fishing rod during use whereas the second opening (2b) is closest to fishing hook during use.

According to any embodiment of the first aspect of the invention, the body (1) may not be symmetrical around the Y-Z-plane as the first end of the body (1) being closest to the fishing rod during use and comprising the first opening (2a) is narrower than the second end of the body (1) closest to the fishing hook and comprising the second opening (2b).

According to any embodiment of the first aspect of the invention, the outer surface of the body (1) is rough and adapted/prepared for painting, optionally the outer surface of the body (1) is sandblasted before painting.

According to any embodiment of the first aspect of the invention, the body (1) may comprise a centrally extending and elevated part (5) extending from the first opening (2a) to the second opening (2b). From the centrally extending and elevated part (5) a wing (4) of less height than the elevated part (5) extends in the X-Z-plane.

According to any embodiment of the first aspect of the invention, the outer profile of half a body (1) or wing (4) extending in the X-Z-plane from the through-going opening (2) is constituted by a convex curve. The convex curve may have its maximum width zₘₐₓ around the middle i.e. around 0,5 times xₘₐₓ, or in the middle third of the length i.e. between 0,33 times xₘₐₓ and 0,66 times xₘₐₓ,

According to any embodiment of the first aspect of the invention, the weight of the body (1) of an inline lure may be between 5-10 gram, or between 15-20 gram, or between 100-250 gram.

According to any embodiment of the first aspect of the invention, the position of maximum width of the body (1) i.e. largest dimension along the Z-axis, may be closer to the second opening (2b) than to the first opening (2a).

A second aspect of the invention relates to a fishing assembly comprising a fishing rod engaging a main line, a secondary line, an inline lure according to the first aspect and a fishing hook or similar, the secondary line is attached to the main line and the secondary line is inserted through the through-going opening (2) of the inline lure, the fishing hook or similar is attached to the part of the second line extending from the through going opening (2) of the body (1) of the inline lure opposite the main line.

### Brief description of the figures

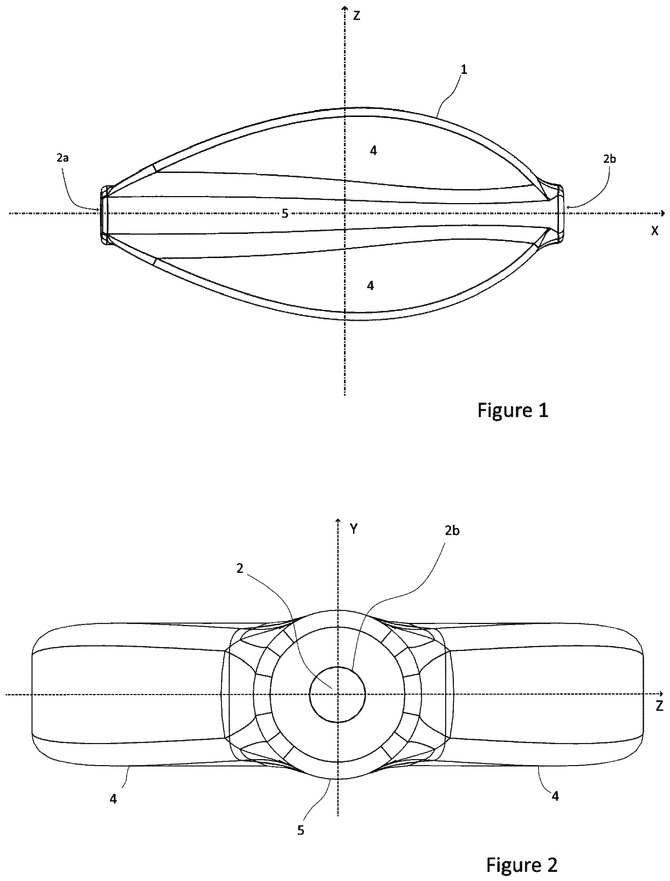

Figure 1 shows a top view of an embodiment of an inline lure according to the invention.
Figure 2 shows a view from the second end of the same embodiment as fig. 1.

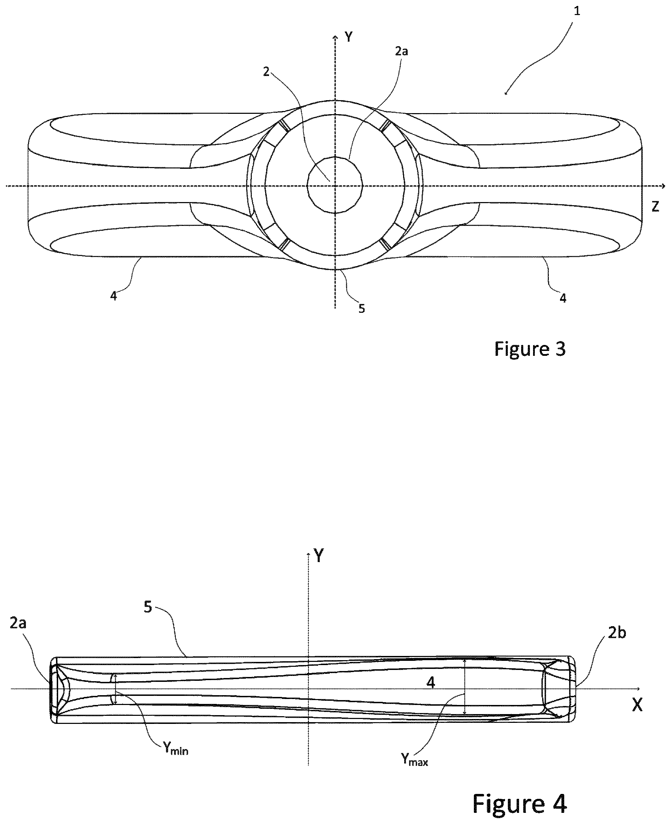

Figure 3 shows a view from the first end of the same embodiment as fig. 1.
Figure 4 shows a side view of the same embodiment as fig. 1.

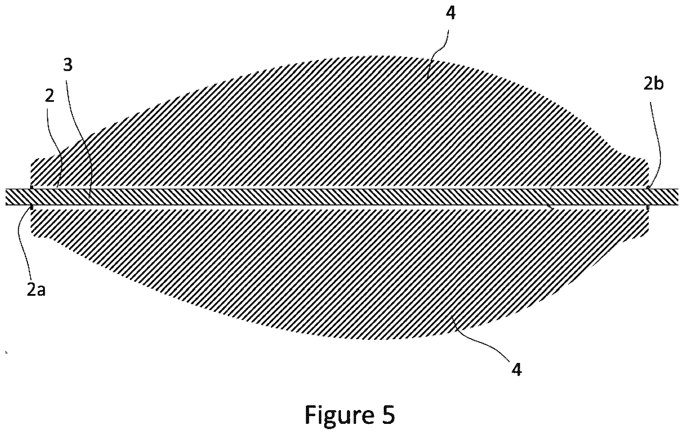

Figure 5 shows a cut-through view in the X-Z-plane of the same embodiment as fig. 1 having a line mounted in the through-going opening.

The present invention will now be described in more detail in the following.

### Detailed description of the invention

### Definitions

Prior to discussing the present invention in further details, the following terms and conventions will first be defined:
*In general* - When this expression is used the discussed feature may be used with all embodiments of the invention.

It should be noted that embodiments and features described in the context of one of the aspects of the present invention also apply to the other aspects of the invention.

The invention will now be described in further details in the following non-limiting examples.

The invention relates to an inline lure to be used when fishing with a fishing rod and a fishing hook.

In general, the inline lure is positioned between a main line and a fishing hook. A pearl or sinker may be positioned between the hook and the inline lure and the inline may be attached to a second line which is attached to the main line by a swivel.

The inline lure comprises a body 1 constituted of a material, which body 1 has a through-going opening 2 in the longitudinal direction (x) of the body 1. The through-going opening 2 comprises two openings, a first and a second opening 2a, 2b, and during use i.e. during fishing, a line 3 is positioned through this through-going opening 2. The line 3 positioned inside the through-going opening 2 during use may be the second line.

The body 1 of the inline lure is made of a material having a density between 2.000 and 2.900 kg/m³, or preferably between 2.100 and 2.800 kg/m³, or preferably between 2.200 and 2.700 kg/m³. This density is below the density for most common metals which are often used for inline lures, and the density of the inline lure contributes to determine how fast the inline lure sinks when inline lure is thrown into the water and pulled back.

An inline lure according to the invention may primarily attract fish species such as salmon and trout species e.g. rainbow trout and sea trout, and sea bars.

The body 1 of the inline lure may be made of an amorphous material such as glass. An amorphous material softens gradually and is easy to shape, however, glass has the advantage of being environmentally inert, and as fishing lures are often lost in nature this is a significant characteristic. If glass is used, the glass may be of any type such as borosilicate glass, aluminosilicate glass, soda lime glass or others, beside the density, the most important consideration when deciding which type of glass to use is availability and price.

Suitable materials for the body of the inline lure may be borosilicate glass which normally has a density of around 2.230-2.530 kg/m³, aluminosilicate glass which normally has a density of 2.630 kg/m³, and soda-lime glass which normally has a density of 2.500 kg/m³,

Commonly used glass such as borosilicate glass has a density within the desired area which means that it is unnecessary to add fillers or air bubbles into the material to adapt the density. If polymers are used to form the body 1 of the inline lure, it will normally be necessary to adapt the density e.g. with fillers of metal in order to make the material heavier.

The first and the second opening 2a, 2b of the through-going opening 2 may be positioned at opposite ends in the longitudinal direction of the body 1, where the first opening (2a) is the opening closest to the fishing rod or main line during use and the second opening (2b) is opening closest to fishing hook during use. When the openings 2a, 2b are positioned at opposite ends, it is possible to connect the two ends by a straight line.

An X-axis may be defined along the through-going opening 2 and the length of the body 1 may then be defined along the X-axis, a Z-axis may be defined perpendicular to the X-axis defining the width of the body 1, and an Y-axis may be defined perpendicular to both the X-axis and the Z-axis defining the height of the body (1).

Normally, the body 1 is symmetrical around the X-Z-plane, i.e. the "upper" and "lower" halves of the body 1 extending in direction of the Y-axis mirrors each other, and normally, the body 1 is also symmetrical around the X-Y-plane i.e. the "left" and "right" halves of the body 1 extending in direction of the Z-axis mirrors each other.

Whereas the body 1 is normally not symmetrical around the Y-Z-plane in direction of the X-axis i.e. the end comprising the first opening 2a and being closest to the fishing rod during use and comprising the first opening (2a) is normally narrower than the second end of the body 1 closest to the fishing hook and comprising the second opening 2b.

The body 1 may be shaped as a torpedo or drop in the longitudinal direction i.e. along the X-axis, meaning that the body 1 has a continuously first increasing and then decreasing cross-section in the X-Z-plane from the end comprising the first opening 2a to the opposite end comprising the second opening 2b. However, the body 1 may comprise flat areas (vertical areas extending in direction of the Y-axis) around the first and second opening 2a, 2b. The lack of symmetry around the Y-Z-plane makes the body 1 of the inline lure move in a desired way through water when the inline lure is dragged towards the user.

The outer surface of the body 1 may be roughed or otherwise prepared for painting, optionally the outer surface of the body 1 may be sandblasted. Before use, the body 1 will normally be painted either by user or by the seller of the product. The colour or colours of the body 1 are optional and may be adapted to the location, the type of water, the fish species to be caught or another condition considered to be of importance for the inline lure to attract fish attention and provoke the fish to attack.

The body 1 may comprise a central elevated part 5 extending from the first opening 2 of the through-going opening 2 to the second opening 2b, and from the central elevated part 5 one or more wings 4 of less height than the elevated part 5 may extend in the X-Z-plane. According to this embodiment, the outer surface of the wings 4 define the width of the body 1.

The position of maximum width of the body 1 i.e. largest dimension along the X-Z-plane, is closer to the second opening 2b of the through-going opening 2 than to the first opening 2a.

Normally, the profile of half a body 1 or of a wing 4 extending from the through-going opening 2 is constituted by a convex curve where a convex curve is a simple curve in the Euclidean plane which lies completely on one side of each and every one of its tangent lines, i.e. no S-shaped-lines defines the outer periphery of half a body 1.

The weight of a body 1 of an inline lure according to the invention may be between 5-10 gram, or between 15-20 gram, or between 100-250 gram. For a body 1 of an inline lure weighing between 5-10 grams, the maximum width of the body 1 i.e. the dimension along the Z-axis in the X-Z-plane, may vary between 18 mm and 25 mm, and the length of the body 1 i.e. the dimension along the X-axis in the X-Z-plane, may vary between 45 and 55 mm, and the height of the wings 4 of the body 1 may vary between 2 and 7 mm.

The invention may also relate to a fishing assembly comprising a fishing rod engaging a main line, a secondary line, an inline lure according to any embodiment of the invention, and a fishing hook or similar. The secondary line may be attached to the main line e.g. by a swivel or loop, and the secondary line may be inserted through the through-going opening 2 of the inline lure, the fishing hook or similar is attached to the part of the second line extending from the second opening 2b of the through going opening (2) of the body 1 of the inline lure, i.e. the opening of the body 1 of the inline lure opposite the main line.

| **Ref no.** | **Reference name** |
|---|---|
| 1 | Body |
| 2 | Through-going opening |
| 2a, 2b | First and second opening of through-going opening |
| 3 | Line |
| 4 | Wings |
| 5 | Central elevated part |

## Claims

1. An inline lure for use when fishing with a fishing rod and a fishing hook, comprising a body (1) constituted of a material, the body (1) has a through-going opening (2) in the longitudinal direction (x) of the body (1) comprising two openings, a first and a second opening (2a, 2b), and a line (3) is positioned through this through-going opening (2) during use, an X-axis is defined along the through-going opening (2) defining the length of the body (1), a Z-axis is defined perpendicular to the X-axis defining the width of the body (1), and an Y-axis is defined perpendicular to both the X-axis and the Z-axis defining the height of the body (1) and the maximum length xₘₐₓ > the maximum width zₘₐₓ > the maximum height yₘₐₓ,
**characterized in that** the body (1) is made of a material having a density between 2.000 and 2.900 kg/m³, or preferably between 2.100 and 2.800 kg/m³, or preferably between 2.200 and 2.700 kg/m³.

2. An inline lure according to claim 1, wherein the body (1) is made of an amorphous material such as glass.

3. An inline lure according to claim 1 or claim 2, wherein the body (1) is made exclusively of an amorphous material such as glass, i.e. the body (1) does not comprise other materials but e.g. glass, however, the body may comprise one, two, three or more different types of glass materials where each glass material may have different density or colour or enclosed gas bubbles.

4. An inline lure according to any previous claim, wherein the maximum length xₘₐₓ ≥ 1.5. maximum width zₘₐₓ.

5. An inline lure according to any previous claim, wherein the maximum length xₘₐₓ ≥ 5. maximum height yₘₐₓ.

6. An inline lure according to any previous claim, wherein the maximum length xₘₐₓ extends between the first and the second opening (2a, 2b) of the through-going opening (2).

7. An inline lure according to any previous claim, wherein the body (1) is symmetrical around the X-Y-plane.

8. An inline lure according to any previous claim, wherein the first and the second opening (2a, 2b) are positioned at opposite ends in the longitudinal direction of the body (1), and the first opening (2a) is closest to the fishing rod during use and the second opening (2b) is closest to fishing hook during use.

9. An inline lure according to any previous claim, wherein the body (1) is not symmetrical around the Y-Z-plane as the first end of the body (1) being closest to the fishing rod during use and comprising the first opening (2a) is either narrower or broader than the second end of the body (1) closest to the fishing hook and comprising the second opening (2b).

10. An inline lure according to any previous claim, wherein the body (1) is symmetrical around the X-Z-plane.

11. An inline lure according to any previous claim, wherein the outer surface of the body (1) is rough and adapted for painting, optionally the outer surface of the body (1) is sandblasted before painting.

12. An inline lure according to any previous claim, wherein the body (1) comprises a central elevated part (5) extending from the first opening (2a) to the second opening (2b), from the central elevated part (5) a wing (4) of less height than the elevated part (5) extends in the X-Z-plane.

13. An inline lure according to any previous claim, wherein the profile of half a body (1) extending in the X-Z-plane from a line defined by the through-going opening (2) is constituted by a convex curve, optionally the convex curve has the maximum width zₘₐₓ around the middle i.e. around 0,5·xₘₐₓ, or in the middle third of the length i.e. between 0,33·xₘₐₓ and 0,66·xₘₐₓ,.

14. An inline lure according to any previous claim, wherein the weight of the inline lure is between 5-10 gram, or between 15-20 gram, or between 100-250 gram.

15. An inline lure according to any previous claim, wherein the position of maximum width zₘₐₓ of the body (1) i.e. the largest dimension along the Z-axis, is closer to the second opening (2b) than to the first opening (2a).
